# EUROPEAN PATENT SPECIFICATION

(11) **EP 3 908 828 B1**
(45) Date of publication and mention of the grant of the patent: **27.12.2023**
(21) Application number: 20700234.6
(22) Date of filing: 03.01.2020
(51) Int. Cl.: G01N 21/76

(54) **DEVICE FOR DETECTION OF A BIOLUMINESCENCE REACTION OF A SAMPLE AND A HAND-HELD ANALYZING AND MEASURING APPARATUS COMPRISING THE DEVICE**
VORRICHTUNG ZUR DETEKTION EINER BIOLUMINESZENZREAKTION EINER PROBE UND EIN DIESE VORRICHTUNG UMFASSENDES TRAGBARES ANALYSE- UND MESSGERÄT
APPAREIL POUR LA DETECTION D'UNE REACTION BIOLUMINSCENTE D'UN ECHANTILLON ET DISPOSITIF PORTABLE COMPRENANT CET APPAREIL

(30) Priority: 07.01.2019 EP 19305015
(43) Date of publication of application: 17.11.2021
(73) Proprietor: Merck Patent GmbH, 64293 Darmstadt (DE)
(72) Inventor: FELDEN, Luc, 67100 Strasbourg (FR); BARGOOT, Frederick G., Wellesley, MA 02482 (US); SQUIRES, David, Lebanon, CT 06249 (US)
(74) Representative: Merck Patent Association
(86) International application number: PCT/EP2020/050053
(87) International publication number: WO 2020/144103

(56) References cited:
- EP-A2- 0 421 156
- WO-A1-2016/149017
- CN-A- 106 367 332
- US-A- 6 055 050
- US-A1- 2012 257 192
- JEAN KAYAIAN ET AL: "Ultrasensitive portable optoelectronic system dedicated to detection of bioluminescence", NOISE AND FLUCTUATIONS (ICNF), 2011 21ST INTERNATIONAL CONFERENCE ON, IEEE, 12 June 2011 (2011-06-12), pages 305-308, XP032038910, DOI: 10.1109/ICNF.2011.5994328 ISBN: 978-1-4577-0189-4

## Description

### Field of the invention

The present invention relates to a device for imaging a bioluminescence reaction of a sample, and to a hand-held analyzing and measuring apparatus for measuring ATP (adenosine tri-phosphate) content of a sample comprising the device.

### Background Art

Commonly, an ATP test is used to determine the cleanliness of an object e.g. of a surface thereof. ATP can be found in all biological residues. In order to execute the test a swab is taken from the object to be tested. The swab is introduced into a luciferin/luciferase reagent in a buffered solution to constitute a sample and, if there is ATP included within the sample light is emitted (bioluminescence) that can be detected by a luminometer and related to the concentration of ATP in the sample. By measuring the light amount it is possible to determine the presence of biological residues e.g. living cells, dead cells, bacterial cells, mammalian cells, etc.. However, the light output is very small and therefore a detecting apparatus makes use of a photomultiplier tube in order to be able to detect even small amounts of light. These photomultiplier tubes require a high voltage power supply which makes the apparatus including such photomultiplier tubes difficult to transport and cumbersome to use outside of a laboratory e.g. in the field. Moreover, this sensor is expensive and fragile.

EP 0439525 B1 discloses a hygiene monitoring apparatus comprising a sample chamber for receiving a vessel containing a light-emitting substance, a photo detector for receiving the emitted light, and an electrical circuit for measuring the light received by the photo detector. The photo detector comprises an avalanche photodiode, and the electrical circuit includes a counter which counts discrete electrical signals issued by the avalanche photodiode within a predetermined period of time. In addition, a temperature control member is provided within the apparatus in order to cool and stabilize the temperature of the avalanche photodiode.

WO 2016/149017 A1 discloses a light detection device comprising a receptacle adapted to receive a sample, a detector, and a reflector disposed along the optical axis between an end of the receptacle body and the input surface of the detector.

EP 0 421 156 A2 discloses a method and apparatus for fluorescence measurements, wherein the sample container is in the form of a cylindrical cuvette provided with reflector means on the bottom so that the unabsorbed exciting radiation reaching the cuvette bottom is reflected back through the sample solution, and the fluorescent radiation emitted by the sample is collected by an ellipsoidal reflector.

US 6,055,050 A discloses a photometer and a test sample holder, with a sample holder including emitted light-reflectant interior surround surface walls.

CN 106367332 A discloses an ATP fluorescent food detector that may be calibrated automatically.

### Problem to be solved

However, it is difficult to detect low concentrations of ATP within the sample due to very small amounts of emitted light because, if there is a very low amount of ATP contained within the sample, an amount of light emitted by the sample is at an equivalent low level. Therefore, it is an object of the present invention to provide a device that is capable of detecting small amounts of light (low amounts of ATP) emitted by a bioluminescence reaction (bioluminescence is a special case of chemiluminescence in biological systems) of a sample. In other words, the object is to provide a device with an increased measuring sensitivity, wherein the device is preferably still easy to transport and to handle in the field.

### Means for solving the Problem

In order to solve the problem described above the present invention provides a device for imaging a bioluminescence reaction of a sample including the features of claim 1 and a hand-held analyzing and measuring apparatus for measuring ATP content of a sample including the features of claim 14.

According to a first aspect of the present invention there is provided a device for imaging a bioluminescence reaction of a sample, comprising: a reflector having a reflecting portion with a parametric form and extending about a first longitudinal axis, a receptacle into which a sample container with a second longitudinal axis can be inserted to be held therein, and a photo sensor with a photosensitive portion, wherein the reflector has an opening through which the sample container can be inserted to a position where the sample container is held in the receptacle, and wherein the receptacle is arranged such that, when the sample container with the sample is held in the receptacle, the sample is surrounded by the reflecting portion so that the light emitted from the sample due to the bioluminescence reaction is reflected by the reflecting portion onto the photosensitive portion of the photo sensor, and the reflecting portion of the reflector has a sectional form in a r-y plane that can be described by the following equation y=A*tan(B*r) where y is a point on the first longitudinal axis of the reflector, A is a predetermined constant, r is the radial distance from the first longitudinal axis to a point on the reflecting portion, B is a predetermined constant such that 0<=B*r<π/2 over the range of r.

By providing a reflector extending about the first longitudinal axis and having an opening the sample container can be inserted through the opening into the reflector and is then substantially surrounded by the reflector, while the reflector collects substantially all available light from the reaction, an increased amount of light emitted by the sample can be reflected or imaged onto the photosensitive portion of the photo sensor. Therefore, a substantial portion of the light emitted by the sample is used and even small amounts of light can be detected by the photo sensor.

According to the invention, the reflecting portion is formed to be rotationally symmetrical about the first longitudinal axis. In other words, each point positioned on a plane perpendicular to the first rotational axis and on the reflecting portion has the same distance from the first rotational axis.

In a further embodiment the opening is located at a fictive apex of the parametric form of the reflecting portion and the first longitudinal axis is parallel to an insertion direction of the sample container. Therefore, the location of the sample container may be varied along the first longitudinal axis without changing the detection efficiency.

The present reflecting portion of the reflector has a sectional form in a r-y plane that can be described by the following equation y=A*tan(B*r) where y is a point on the first longitudinal axis of the reflector, A is a predetermined constant, r is the radial distance from the first longitudinal axis to a point on the reflecting portion, B is a predetermined constant such that 0 < B*r < π/2 over the range of r. During a test series (that is, ray trace optical simulation) the reflector defined by the equation described above delivers best results. Therefore, even a small ATP concentration that is related to an amount of light emitted may be detected.

In a further embodiment the receptacle is arranged such that the second longitudinal axis of the sample container, when held in the receptacle, is disposed in an orientation parallel to the first longitudinal axis of the reflecting portion.

In an alternative embodiment the receptacle is arranged such that the second longitudinal axis of the sample container, when held in the receptacle, is disposed in an orientation inclined to the first longitudinal axis of the reflecting portion.

In a further embodiment the reflecting portion of the reflector is patterned or structured.

In a still further embodiment the photo sensor is a photodiode preferably a multi-pixel photon counter, a silicon photomultiplier, a charge coupled device or a photomultiplier tube.

In a further embodiment the device comprises a light source arranged such that light emitted by the light source can be received by the photo sensor. Particularly, the light source is configured to emit light with a predetermined intensity and/or wavelength that can be received by the photo sensor.

In a further embodiment the device including a function for calibrating the photo sensor by the light emitted from the light source.

In a further embodiment a shield or mask is provided between the sample container, when it is held in the receptacle, and the photo sensor such that light emitted from the sample due to the bioluminescence reaction is prevented from directly reaching the photosensitive portion of the photo sensor. The light emitted by color caps, which might be located at the bottom of the swabs, does not influence the measurement.

In an embodiment the device further comprises a temperature sensor for measuring the temperature of the sample and/or of the sample container when the sample container with the sample is held in the receptacle.

Therefore, the temperature of the sample may be measured before and/or during and/or after the bioluminescence reaction takes/took place within the sample container. Accordingly, the temperature of the sample may be used within the calibrating of the photo sensor and temperature compensation of the bioluminescent reaction.

In a further embodiment the temperature sensor is either a contact sensor arranged to contact the sample container or a contactless sensor.

In an embodiment the device comprises a chamber that accommodates the reflecting portion of the reflector, at least a part of the sample container when it is held in the receptacle, and the photosensitive portion of the photo sensor, wherein the chamber is arranged such that these elements are shielded from ambient light.

Therefore, a detection of light emitted by the sample is not influenced by any ambient light. As a result, the detection efficiency is increased. In other words, a detection result is independent of the existence of ambient light.

According to a further aspect of the present invention the invention provides a hand-held analyzing and measuring apparatus for measuring ATP content of a sample, comprising a device for imaging a bioluminescence reaction according to any one of the embodiments described above.

### Brief description of drawings

Fig. 1 is a sectional view illustrating a device for imaging a bioluminescence reaction according to an embodiment of the present invention.
Fig. 2a is a sectional view illustrating a device for imaging a bioluminescence reaction according to another embodiment of the present invention.
Fig. 2b is a sectional view illustrating a device for imaging a bioluminescence reaction according to a further embodiment of the present invention.
Fig. 3 is a partial sectional view of a reflector according to an embodiment of the present invention.
Fig. 4 is a sectional view of a hand-held analyzing and measuring apparatus according to an embodiment of the present invention.
Fig. 5 is a perspective sectional view of the hand-held analyzing and measuring apparatus according to the embodiment of the present invention.

### Detailed description

Hereinafter, embodiments of the present invention will be described with reference to the accompanying drawings. Basically, the present invention uses a bioluminescence reaction which is a special case of a chemiluminescence reaction. As described above a sample is formed of a swab of a target on which the presence or absence of biological residues (i.e. to evaluate the cleanliness of the target), is to be measured and to be quantified, and a reagent that is capable of producing light through a consumption of adenosine tri-phosphate (ATP), the reagent may be luciferin/luciferase in a buffered solution, for example. The sample is in a liquid state of aggregation or may be also in any other state of aggregation on a surface, for example. The sample is received in a transparent or semitransparent sample container such as a tube (test tube), a cuvette, a hemolysis tube, an Eppendorf tube or the like. The sample container may be part of a test-pen such as a HY-LiTE^{®} 2 test-pen. In order to execute the test the sample container is inserted into a device 10 for detecting and measuring the bioluminescence reaction of the sample.

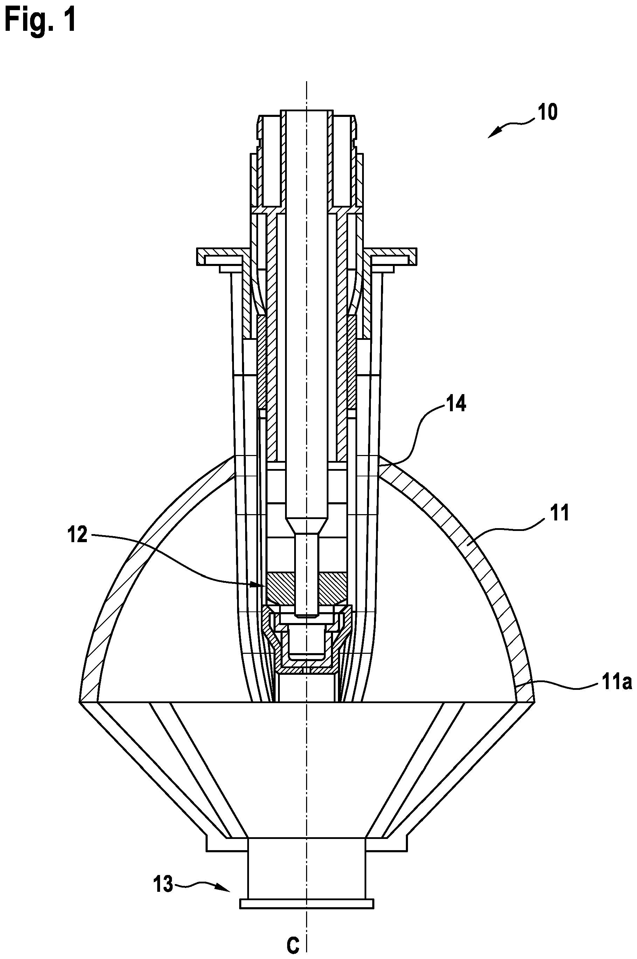

Fig. 1 is a sectional view illustrating the device 10 for imaging a bioluminescence reaction according to an embodiment of the present invention. The device 10 comprises a reflector 11 having a reflecting portion 11a with a parametric form extending about a first longitudinal axis C. Preferably the reflecting portion 11a is formed to be rotationally symmetrical about the first longitudinal axis C. As a result, the reflector 11 has a conical shape that is defined by a curve that is rotated about the first longitudinal axis C. In other words, all points of the reflecting portion 11a on a sectional plane perpendicular to the first longitudinal axis C have the same distance from a point on the first longitudinal axis C.

The reflecting portion 11a of the reflector 11 is arranged to reflect electromagnetic radiation such as photons and to redirect and/or to concentrate these radiations in a certain direction onto a photosensitive portion of a photo sensor 13 that is to be described later. The reflecting portion 11a may have a reflecting coating provided on its surface arranged to reflect the radiation emitted by the bioluminescence reaction.

Alternatively, or in addition the reflecting portion 11a of the reflector 11 may itself be made of a reflecting material like polished stainless steel, for example. Preferably the reflecting portion 11a and the reflector 11 is machined in aluminium with optical polishing.

By extending about, i.e. surrounding the first longitudinal axis C where a sample container is placed as described below the reflecting portion 11a has a shape that captured, redirects and concentrates and thus images the photons i.e. light emitted from the sample onto the photosensitive portion of the photo sensor 13. Thereby, the light imaged on the photosensitive portion of the photo sensor 13 may have an increased intensity as compared to a device that detects the direct emitted light from the sample. The design of the reflecting portion 11a of the reflector 11 allows the use of photo sensors with a small photosensitive portion like silicon photomultipliers (Si-PM) or multi-pixel photon counter (MPPC) since it has the capability to image the light from the bioluminescence reaction onto a small area.

Summarized, the reflecting portion 11a of the reflector 11 is designed to collect essentially all the light emitted from the sample due to the bioluminescence reaction and to image (re-image) it onto the photosensitive portion of the photo sensor 13. In other words, the reflector 11 is a quasi-imaging device that is designed to make a projection of the light emitted by the sample during a bioluminescence reaction to an area in space (the photosensitive portion of the photo sensor 13). In other words, the light is not focalized to one single point on the photo sensitive portion of the photo sensor 13 but is imaged over the whole area of the photo sensitive portion. Therefore, the photo sensor 13 is not over saturated due to receiving focused light having a high intensity on one small portion of the photo sensitive portion with respect to the whole area of the photo sensitive portion.

The device 10 further comprises a receptacle 12 into which the sample container with a second longitudinal axis can be inserted to be received and held therein in a predetermined position for the detection process.

Particularly, the receptacle 12 may be specifically arranged to receive a test-pen like the HY-LiTE^{®} 2 test-pen as described above. The second longitudinal axis may coincide with the rotational axis of the reflector 11.

According to the present invention the receptacle 12 is arranged at a position in relation to the reflecting portion 11a and the photo sensor 13 such that, when the sample container with the sample is held in the receptacle 12, substantially all the light emitted from the sample due to the bioluminescence reaction is reflected by the reflecting portion 11a of the reflector 11 onto the photosensitive portion of the photo sensor 13. Further, the receptacle 12 is formed such that an amount of light emitted by the sample and blocked by the receptacle 12 is minimized.

The photo sensor 13 with the photosensitive portion is capable of receiving light (photons) or other electromagnetic radiation and converting the light into a voltage or current. The photosensitive portion of the photo sensor 13 may have a window (illumination window) with an anti-reflect coating arranged such that the light reflected by the reflecting portion 11a first has to pass through the window before it is received by the photo sensitive portion. According to the present invention the photo sensor 13 may be preferably a photodiode (PD), most preferably a multi-pixel photon counter (MPPC). Moreover, the photo sensor 13 may be also a silicon photomultiplier, a charge coupled device (CCD) or a photomultiplier tube (PMT). In other words, any photo sensor that can detect the photons emitted by the sample may be employed. In order to cool the sensor 13 to avoid any negative influences due to heating of the sensor 13, a cooling means may be employed that is capable of sufficiently cool the sensor 13, such as a thermoelectric cooler (TEC).

Specifically, photodiodes provide advantages such as being robust, being small, requiring a low operating voltage (<100 volts vs. in the order of 1000 volts for the PMTs), retaining calibration, being relatively cheap, having a solid state thus being relatively insensible for vibration etc.. The photomultiplier tubes provide advantages such as being sensitive to low levels of light, detects multiple frequencies and being suitable for bioluminescence and chemiluminescence. The photo sensor 13 may be implemented in a digital (counting mode) and/or analogue (analogue mode, i.e. voltage measurement) manner. The digital manner provides a high sensitivity at a low end of a detection range but will saturate at a high end of the detection range. The analogue manner provides a high sensitivity at the high end of the detection range but lacks sensitivity at the low end thereof. By combining these two modes the range of detection of the photo sensor 13 can be extended and the sensitivity of the detection can be improved over the whole detection range. This technique of range extension was already introduced in the 1980's for photomultiplier tubes as illustrated in the paper "photometric instrument automatic switching between photon counting and analog modes", Nau and Niemann, 1981, American chemical society.

Moreover, there may be employed more than one photo sensor of the same or different kind. For example, a second photo sensor of one of the types described above may be provided in addition to a charged coupled device (CCD) for detecting light emitted from the sample in order to identify a filling level and/or a colour of the sample within the sample container.

The reflector 11 has an opening 14 through which the sample container can be inserted to a position where the sample container is held in the receptacle 12. Thus, the sample container is at least partly, preferably completely circumferentially surrounded by the reflecting portion 11a of the reflector 11.

In the embodiment shown in the figures the opening 14 is located at a fictive apex of the parametric form of the reflector 11 and the first longitudinal axis C is parallel to an insertion direction of the sample container and its second longitudinal axis. That is, the reflector 11 has a substantially tapered shape with an increasing diameter towards the end of the reflector 11 along the first longitudinal axis C where the sample will be located. Further, the hole of the fictive apex minimizes the amount of sample light escaping from the inside of the reflector 11 to the outside and the amount of stray light entering the reflector 11.

The reflecting portion 11a of the reflector 11 has a sectional form in a r-y plane that can be described by the following equation y=A*tan(B*r) where y is a point on the first longitudinal axis C of the reflector 11, A is an predetermined constant, r is the radial distance from the first longitudinal axis C to a point on the reflecting portion, B is a predetermined constant such that 0 < B*r < π/2 over the range of r. That is, the curve (described above) that is rotated about the first longitudinal axis C may be described by this formula.

Due to its design the reflecting portion 11a of the reflector 11 is arranged to reflect light emitted by the sample due to the bioluminescence reaction independently of a filling level of the sample container (also to a foam height inside the sample container). That is, the device 10 may provide sufficient measurement results even if the filling level of the sample within the sample container is specifically high or low in the direction of gravity. Specifically, this effect was determined by investigating the reflector 11 using the above mentioned ray trace method. In more detail, some rays leaving the sample container at different heights of the sample container still hit the sensor 13.

In an alternative embodiment the receptacle 12 is arranged such that the second longitudinal axis of the sample container, when held in the receptacle 12, is disposed in an orientation inclined to the first longitudinal axis C of the reflector 11. In other words, the sample container does not need to be strictly held by the receptacle in the direction of the first longitudinal axis C. Therefore, the use of the device 10 is facilitated because the sample container can be inserted into the device 10 with a certain tolerance with respect to an alignment on the first longitudinal axis C.

In addition, insensitivity to tilt angles while the second longitudinal axis of the sample container is inclined to the direction of gravity is increased by providing the reflector 11 of the present invention. That is, the device 10 may provide sufficient measurement results even if the device 10 is inclined such that the first longitudinal axis C is inclined to the direction of gravity.

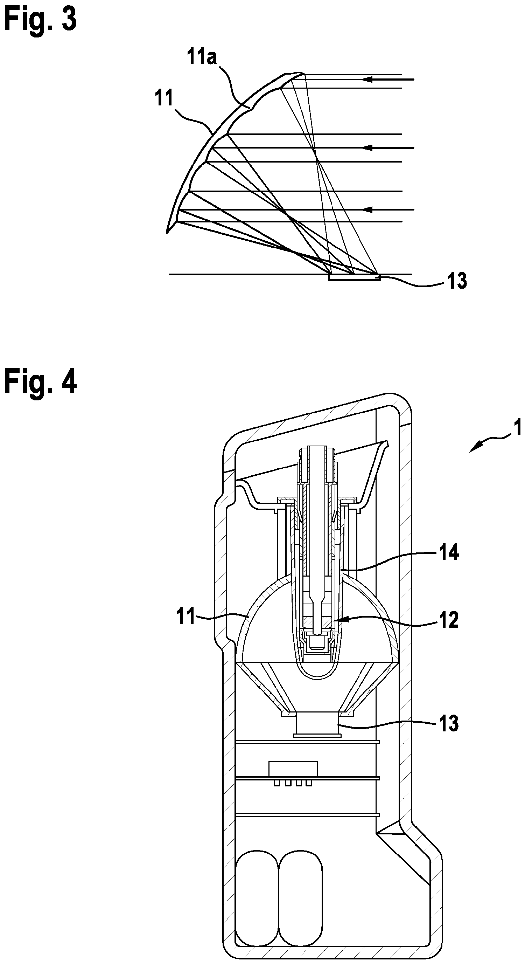

Here, the reflector 11 provides the same effect as outlined above with respect to the filling level of the sample container. On the other hand, if a spherical reflector is provided, the emitted light is only reflected to one focal point onto a sensor so that in case the container is tilted (i.e. the light source is deviated from its original position), not the whole light might be received by the sensor. Fig. 3 is a partial sectional view of a reflector 11 according to an embodiment. According to the present embodiment the reflecting portion 11a of the reflector 11 is patterned or structured. That is, the light emitted by sample due to the bioluminescence reaction within the sample container may be further concentrated by the pattern and/or the structure of the reflecting portion 11a of the reflector 11 so as to image the emitted light in the photo sensitive portion of the photo sensor 13 without over saturating the photo sensor 13. The structuring may be achieved by attaching segments each having a defined shape on the reflecting portion 11a of the reflector 11. The segments may be also formed integral with the reflecting portion 11a of the reflector 11. Further, the pattern may be formed by micro-parabolas which follow a parabolic shape.

The device 10 may comprise a light source arranged such that a light emitted by the light source can be received by the photo sensor 13. The light source is configured to emit a predetermined amount and spectrum of light that can be detected by the photo sensor 13. The light source may be a LED (check LED), for example.

The device 10 may include a function for calibrating the photo sensor 13 by the light emitted from the light source. Thus the photo sensor 13 may be calibrated with the known predetermined amount of light having a specific intensity and/or wavelength emitted by the light source. In more detail, the function for calibrating may include an operation of the light source so as to emit a defined light with respect to intensity and/or wavelength each time the device 10 is started. This light is received by the sensor 13 and a measured rate relating to the measured light is generated. This measured rate is compared with a target rate determined during an initial factory calibration in order to attain a ratio rate. The ratio rate is used to adapt i.e. to correct a current measurement. Thus, the photo sensor 13 may be adapted to different conditions at varying locations, aging and degradation of the sensor may be compensated. In addition, the photo sensor 13 may be calibrated to adapt to a plurality of different types of sample containers.

According to another embodiment a shield or mask is provided in the device 10 between the sample container, when it is held by the receptacle 12, and the photo sensor 13 such that light emitted from the sample due to the bioluminescence reaction is prevented from directly reaching the photosensitive portion of the photo sensor 13. In other words, the photo sensor 13 can only receive light emitted by the sample that has been reflected by the reflecting portion 11a and is thus dispersed over a larger surface as compared to the case of directly receiving the emitted light. This improves the comparability of measurement results attained with different sample containers. In more detail, different sample containers may have structural differences e.g. different coloured bottom caps. A quantum efficiency of the sensor 13 versus the structural configuration of sample containers varies depending on the configuration of each sample container e.g. different coloured bottom caps may provide additional light due to phosphorescence. Therefore, light emitted by the bioluminescence reaction that is directly received by the photo sensor 13 may vary due to these structural differences. Having the shield or mask no direct light is received by the photo sensor and thus there is substantially no influence on the measurement result due to the structural differences of the different sample containers. The shield or mask (e.g. a cuff) may be provided on the receptacle 12 and/or may be provided on the sample container i.e. a test-pen. That is, the test-pen may have an intransparent bottom cap provided such that it is disposed between the sample container and the photo sensor 13 when the test-pen is held in the receptacle 12.

Further, the shield or mask (described above) should be provided between the sample container and the photo sensor 13 to prevent stray light from the cap from reaching the photosensitive portion of the photo sensor 13.

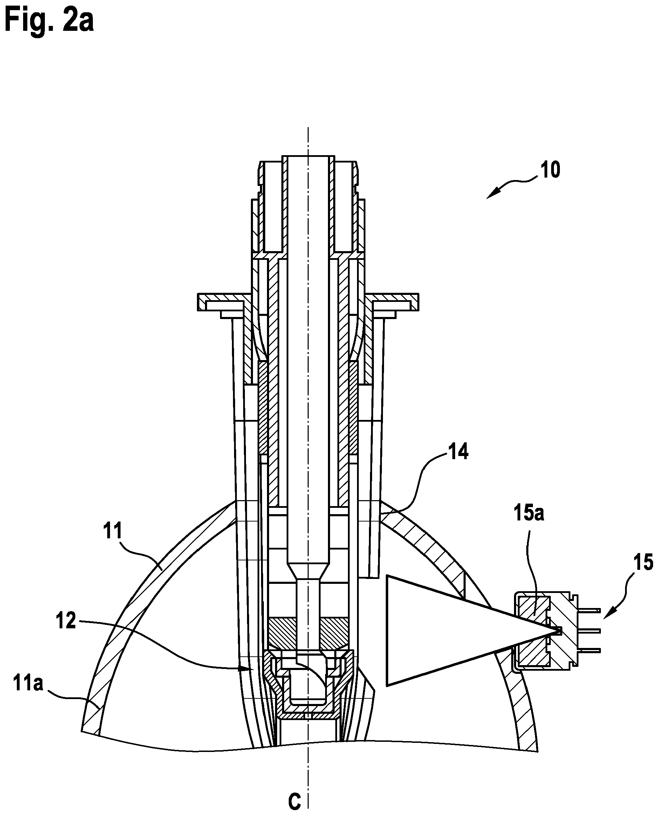

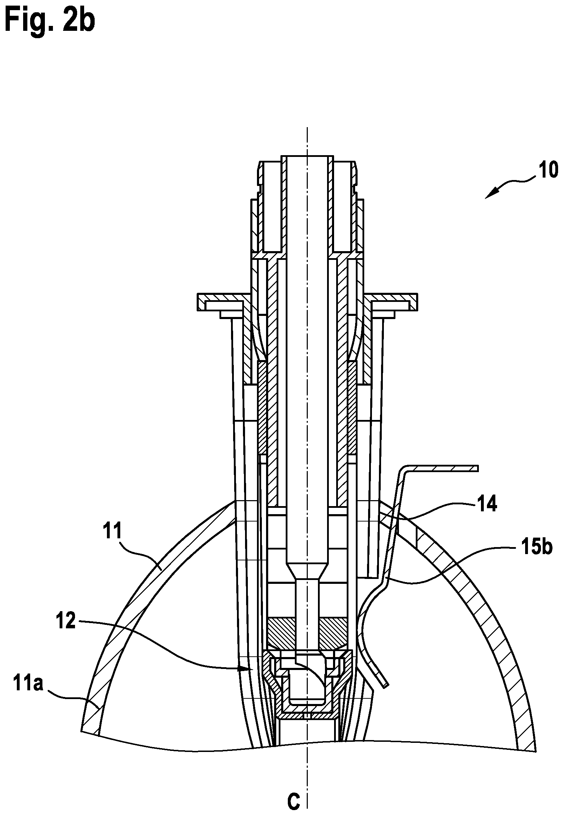

Fig. 2a and Fig. 2b are sectional views illustrating a device 10 for imaging a bioluminescence reaction according to a further embodiment. According to the embodiment a temperature sensor 15 for measuring the temperature of the sample and/or of the sample container when the sample container with the sample is held in the receptacle 12 is provided within the device 10. The measured temperature may be used in further evaluating steps and/or within the function for calibrating the photo sensor 13. Further, by determining the temperature of the sample the light intensity may be extrapolated to a desired (i.e. not measured temperature) temperature (e.g. at 22°C according to DIN 10124). In addition, the temperature sensor 15 can measure the temperature at any time even when the sample container is not disposed within the receptacle 12. Therefore, temperatures for calibrating the device 10 for use in different locations and/or conditions can be easily attained. Moreover, the temperature sensor 15 can detect the temperature in predetermined time intervals and store the measured temperatures temporarily.

The temperature sensor may be a contact sensor 15b (see Fig. 2b) like a thermocouple, arranged to contact the sample container or a contactless sensor 15a (see Fig. 2a) like an infrared thermopile sensor. Further, the contact temperature sensor 15b may be a flexible hook that is configured to come into contact with the sample container when the sample container is held in the receptacle 12. The hook may be a flexible arm extending inside the reflector 11 and being attached outside the reflector 11. Further, the hook may be formed such that it provides sufficient heat conductivity in order to transmit heat from the sample container to a heat detection portion which is able to detect the temperature. That is, the hook may be made of metal or other materials having a high conductivity.

In a further embodiment the device 10 comprises a chamber that accommodates the reflecting portion 11a of the reflector 11, at least a part of the sample container when it is held in the receptacle 12, and the photosensitive portion of the photo sensor 13, wherein the chamber is arranged such that the accommodated members are shielded from ambient light. The chamber may be a casing that is arranged to block ambient light and that accommodates the reflector 11, the photo sensitive portion of the photo sensor 13, and the receptacle 12.

According to an embodiment of the present invention there is provided a hand-held analyzing and measuring apparatus 1 for measuring ATP content of a sample. The portable apparatus 1 comprises the device 10 for imaging a bioluminescence reaction according to any one of the embodiments described before.

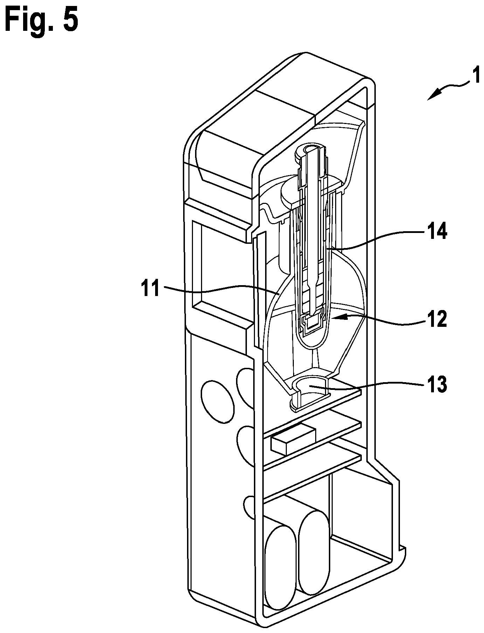

Fig. 4 and Fig. 5 are showing the hand-held analyzing and measuring apparatus 1 according to the embodiment of the present invention.

The apparatus 1 has an outer shell serving as an outer casing arranged such that the apparatus 1 may be held in one hand of an operator or may be provided on a bench. Further, the apparatus 1 has an opening. The opening is covered by a lid that may be provided in a slidable or hinged manner.

The device 10 is provided inside the casing of the apparatus 1 such that the sample container may be inserted via the opening of the apparatus 1 through the opening 14 of the reflector 11 to be held in the receptacle 12 in the predetermined position. That is, the opening of the apparatus 1 and the opening 14 of the reflector 11 are arranged on the first longitudinal axis C of the reflector 11 respectively. But the opening of the apparatus 1 and the opening 14 of the reflector 11 are not necessarily arranged on the first longitudinal axis C but may be also arranged in a different orientation.

The test-pen (described above) when inserted into the apparatus 1 such that the sample container is held by the receptacle 12 in the predetermined position covers the opening 14 of the reflector 11 such that no ambient light may enter into the space surrounded by the reflector 11. The test-pen has a handling portion where the test-pen may be held by the operator while using it. The handling portion is provided at a distal end of the test-pen as compared to a location at the test-pen where the sample container is provided. Further, the test-pen is arranged such that at least the handling portion sticks out of the device 10 when the test-pen is inserted into the apparatus 1 to be easily removed by the operator.

In addition, there may be an intermediate seal disposed between the opening of the apparatus 1 and the opening 14 of the reflector 11 having a through hole allowing the test-pen to pass through. The intermediate plate may function as guidance for the test-pen during movement of inserting and/or removing the test-pen. The intermediate plate may be an integral portion of the apparatus 1.

Further, an output interface such as a display where detection results and other information may be presented to the operator is provided on the apparatus 1. In addition, the apparatus 1 has an input interface such as a control panel which is arranged to receive instructions from the operator. In addition, the apparatus 1 may have at least one terminal capable of connecting the apparatus 1 with other devices such as a computer or other evaluating apparatus.

Moreover, the apparatus 1 has an energy source such as a battery to provide an energy supply for internal processes. In addition, the apparatus 1 may have a terminal in order to connect the apparatus 1 to an external energy supply for supplying energy and/or for recharging the energy source of the apparatus 1.

The apparatus 1 has a control device arranged to control previously determined measurement procedures. In addition, an evaluation device arranged to evaluate received information's such as information's from the photo sensor 13 and/or the temperature sensor 15 is provided. The evaluation device is able to calculate results and output them e.g. via the output interface. The control device and/or the evaluation device may be provided with a storage e.g. for storing predetermined information or
measurement results.

### Reference Signs

- 1: Hand-held analyzing and measuring apparatus
- 10: Device for imaging a bioluminescence reaction
- 11: Reflector
- 11a: Reflecting portion
- 12: Receptacle
- 13: Photo Sensor
- 14: Opening
- 15: Temperature Sensor
- 15a: Contactless Temperature Sensor
- 15b: Contact Temperature Sensor

## Claims

1. A device (10) for imaging a bioluminescence reaction of a sample, comprising:
a reflector (11) having a reflecting portion (11a) with a parametric form and extending about a first longitudinal axis (C),
a receptacle (12) into which a sample container with a second longitudinal axis can be inserted to be held therein, and
a photo sensor (13) with a photosensitive portion,
wherein the reflector (11) has an opening (14) through which the sample container can be inserted to a position where the sample container is held in the receptacle (12),
wherein the receptacle (12) is arranged such that, when the sample container with the sample is held in the receptacle (12), the sample is surrounded by the reflecting portion (11a) so that the light emitted from the sample due to the bioluminescence reaction is reflected by the reflecting portion (11a) onto the photosensitive portion of the photo sensor (13), and wherein the reflecting portion (11a) of the reflector (11) is formed to be rotationally symmetrical about the first longitudinal axis (C);
the device being **characterized in that** the reflecting portion (11a) of the reflector (11) has a sectional form in a r-y plane that can be described by the following equation y=A*tan(B*r) where y is a point on the first longitudinal axis (C) of the reflector (11), A is a predetermined constant, r is the radial distance from the first longitudinal axis (C) to a point on the reflecting portion (11a), B is a predetermined constant such that 0<B*r<π/2 over the range of r.

2. The device (10) according to claim 1, wherein the opening (14) is located at a fictive apex of the parametric form of the reflecting portion (11a) and the first longitudinal axis (C) is parallel to an insertion direction of the sample container.

3. The device (10) according to any one of claims 1 to 2, wherein the receptacle (12) is arranged such that the second longitudinal axis of the sample container, when held in the receptacle (12), is disposed in an orientation parallel to the first longitudinal axis (C) of the reflecting portion (11a).

4. The device (10) according to any one of claims 1 to 2, wherein the receptacle (12) is arranged such that the second longitudinal axis of the sample container, when held in the receptacle (12), is disposed in an orientation inclined to the first longitudinal axis (C) of the reflecting portion (11a).

5. The device (10) according to any one of claims 1 to 4, wherein the reflecting portion (11a) of the reflector (11) is patterned or structured.

6. The device (10) according to any one of claims 1 to 5, wherein the photo sensor (13) is a photodiode preferably a multi-pixel photon counter, a silicon photomultiplier, a charge coupled device or a photomultiplier tube.

7. The device (10) according to any one of claims 1 to 6, further comprising a light source arranged such that light emitted by the light source can be received by the photo sensor (13).

8. The device (10) according to claim 7, including a function for calibrating the photo sensor (13) by the light emitted from the light source.

9. The device (10) according to any one of claims 1 to 8, wherein a shield or mask is provided between the sample container, when it is held in the receptacle (12), and the photo sensor (13) such that light emitted from the sample due to the bioluminescence reaction is prevented from directly reaching the photosensitive portion of the photo sensor (13).

10. The device (10) according to any one of claims 1 to 9, further comprising a temperature sensor (15) for measuring the temperature of the sample and/or of the sample container when the sample container with the sample is held in the receptacle (12).

11. The device (10) according to claim 10, wherein the temperature sensor is either a contact sensor (15b) arranged to contact the sample container or a contactless sensor (15a).

12. The device (10) according to any one of claims 1 to 11, comprising a chamber that accommodates the reflecting portion (11a) of the reflector (11), at least a part of the sample container when it is held in the receptacle (12), and the photosensitive portion of the photo sensor (13), wherein the chamber is arranged such that these elements are shielded from ambient light.

13. A hand-held analyzing and measuring apparatus (1) for measuring ATP content of a sample, comprising a device (10) for imaging a bioluminescence reaction according to any one of claims 1 to 12.

## Patentansprüche

1. Vorrichtung (10) zur Bildgebung einer Biolumineszenzreaktion einer Probe, umfassend:
einen Reflektor (11), der einen reflektierenden Teil (11a) mit einer parametrischen Form aufweist und sich um eine erste Längsachse (C) erstreckt,
eine Aufnahme (12), in die ein Probenbehälter mit einer zweiten Längsachse eingesetzt werden kann, um darin gehalten zu werden, und
einen Photosensor (13) mit einem lichtempfindlichen Teil,
wobei der Reflektor (11) eine Öffnung (14) aufweist, durch die der Probenbehälter in eine Position eingesetzt werden kann, in der der Probenbehälter in der Aufnahme (12) gehalten wird, und
wobei die Aufnahme (12) derart angeordnet ist, dass, wenn der Probenbehälter mit der Probe in der Aufnahme (12) gehalten wird, die Probe von dem reflektierenden Teil (11a) umgeben ist, so dass das von der Probe aufgrund der Biolumineszenzreaktion emittierte Licht von dem reflektierenden Teil (11a) auf den lichtempfindlichen Teil des Photosensors (13) reflektiert wird, und
wobei der reflektierende Teil (11a) des Reflektors (11) derart ausgebildet ist, dass er um die erste Längsachse (C) rotationssymmetrisch ist;
wobei die Vorrichtung **dadurch gekennzeichnet ist, dass** der reflektierende Teil (11a) des Reflektors (11) eine Schnittform in einer r-y-Ebene aufweist, die durch die folgende Gleichung y=A*tan(B*r) beschrieben werden kann, wobei y ein Punkt auf der ersten Längsachse (C) des Reflektors (11) ist, A eine vorgegebene Konstante ist, r der radiale Abstand von der ersten Längsachse (C) zu einem Punkt auf dem reflektierenden Teil (11a) ist, B eine vorgegebene Konstante ist, so dass 0 < B*r < π/2 über den Bereich von r ist.

2. Vorrichtung (10) nach Anspruch 1, wobei sich die Öffnung (14) an einem fiktiven Scheitelpunkt der parametrischen Form des reflektierenden Teils (11a) befindet und die erste Längsachse (C) parallel zu einer Einsetzrichtung des Probenbehälters verläuft.

3. Vorrichtung (10) nach irgendeinem der Ansprüche 1 bis 2, wobei die Aufnahme (12) derart angeordnet ist, dass die zweite Längsachse des Probenbehälters, wenn er in der Aufnahme (12) gehalten wird, in einer Ausrichtung parallel zur ersten Längsachse (C) des reflektierenden Teils (11a) angeordnet ist.

4. Vorrichtung (10) nach irgendeinem der Ansprüche 1 bis 2, wobei die Aufnahme (12) derart angeordnet ist, dass die zweite Längsachse des Probenbehälters, wenn er in der Aufnahme (12) gehalten wird, in einer zur ersten Längsachse (C) des reflektierenden Teils (11a) geneigten Ausrichtung angeordnet ist.

5. Vorrichtung (10) nach irgendeinem der Ansprüche 1 bis 4, wobei der reflektierende Teil (11a) des Reflektors (11) gemustert oder strukturiert ist.

6. Vorrichtung (10) nach irgendeinem der Ansprüche 1 bis 5, wobei der Photosensor (13) eine Photodiode, vorzugsweise ein Mehrpixel-Photonenzähler, ein Silizium-Photomultiplier, eine ladungsgekoppelte Vorrichtung oder eine Photomultiplierröhre ist.

7. Vorrichtung (10) nach irgendeinem der Ansprüche 1 bis 6, ferner umfassend eine Lichtquelle, die derart angeordnet ist, dass von der Lichtquelle emittiertes Licht von dem Photosensor (13) empfangen werden kann.

8. Vorrichtung (10) nach Anspruch 7, mit einer Funktion zur Kalibrierung des Photosensors (13) durch das von der Lichtquelle emittierte Licht.

9. Vorrichtung (10) nach irgendeinem der Ansprüche 1 bis 8, wobei eine Abschirmung oder Maske zwischen dem Probenbehälter, wenn dieser in der Aufnahme (12) gehalten wird, und dem Photosensor (13) bereitgestellt wird, so dass das von der Probe aufgrund der Biolumineszenzreaktion emittierte Licht daran gehindert wird, den lichtempfindlichen Teil des Photosensors (13) direkt zu erreichen.

10. Vorrichtung (10) nach irgendeinem der Ansprüche 1 bis 9, ferner umfassend einen Temperatursensor (15) zur Messung der Temperatur der Probe und/oder des Probenbehälters, wenn der Probenbehälter mit der Probe in der Aufnahme (12) gehalten wird.

11. Vorrichtung nach Anspruch 10, wobei der Temperatursensor entweder ein Kontaktsensor (15b), der derart angeordnet ist, dass er den Probenbehälter berührt, oder ein kontaktloser Sensor (15a) ist.

12. Vorrichtung (10) nach irgendeinem der Ansprüche 1 bis 11, umfassend eine Kammer, die den reflektierenden Teil (11a) des Reflektors (11), mindestens einen Teil des Probenbehälters, wenn er in der Aufnahme (12) gehalten wird, und den lichtempfindlichen Teil des Photosensors (13) aufnimmt, wobei die Kammer so angeordnet ist, dass diese Elemente vor Umgebungslicht geschützt sind.

13. Tragbares Analyse- und Messgerät (1) zur Messung des ATP-Gehalts einer Probe, umfassend eine Vorrichtung (10) zur Bildgebung einer Biolumineszenzreaktion nach irgendeinem der Ansprüche 1 bis 12.

## Revendications

1. Dispositif (10) pour imager une réaction de bioluminescence d'un échantillon, comprenant :
un réflecteur (11) qui comporte une partie réfléchissante (11a) présentant une forme paramétrique et s'étendant autour d'un premier axe longitudinal (C),
un réceptacle (12) à l'intérieur duquel un moyen de contenance d'échantillon qui présente un second axe longitudinal peut être inséré pour être contenu à l'intérieur, et
un photocapteur (13) qui comporte une partie photosensible,
dans lequel le réflecteur (11) comporte une ouverture (14) au travers de laquelle le moyen de contenance d'échantillon peut être inséré jusqu'à une position dans laquelle le moyen de contenance d'échantillon est contenu dans le réceptacle (12), et
dans lequel le réceptacle (12) est agencé de telle sorte que, lorsque le moyen de contenance d'échantillon avec l'échantillon est contenu dans le réceptacle (12), l'échantillon soit entouré par la partie réfléchissante (11a) de telle sorte que la lumière émise depuis l'échantillon du fait de la réaction de bioluminescence soit réfléchie par la partie réfléchissante (11a) sur la partie photosensible du photocapteur (13), et
dans lequel la partie réfléchissante (11a) du réflecteur (11) est formée de manière à ce qu'elle présente une symétrie de rotation autour du premier axe longitudinal (C) ;
le dispositif étant **caractérisé en ce que** la partie réfléchissante (11a) du réflecteur (11) présente une forme en coupe transversale dans un plan r-y qui peut être décrite par l'équation suivante y = A*tan(B*r) dans laquelle y est un point sur le premier axe longitudinal (C) du réflecteur (11), A est une constante prédéterminée, r est la distance radiale depuis le premier axe longitudinal (C) jusqu'à un point sur la partie réfléchissante (11a), B est une constante prédéterminée qui est telle que 0 < B*r < π/2 sur la plage de r.

2. Dispositif (10) selon la revendication 1, dans lequel l'ouverture (14) est localisée au niveau d'un apex fictif de la forme paramétrique de la partie réfléchissante (11a) et le premier axe longitudinal (C) est parallèle à une direction d'insertion du moyen de contenance d'échantillon.

3. Dispositif (10) selon l'une quelconque des revendications 1 et 2, dans lequel le réceptacle (12) est agencé de telle sorte que le second axe longitudinal du moyen de contenance d'échantillon, lorsqu'il est contenu dans le réceptacle (12), soit disposé selon une orientation parallèle au premier axe longitudinal (C) de la partie réfléchissante (11a).

4. Dispositif (10) selon l'une quelconque des revendications 1 et 2, dans lequel le réceptacle (12) est agencé de telle sorte que le second axe longitudinal du moyen de contenance d'échantillon, lorsqu'il est contenu dans le réceptacle (12), soit disposé selon une orientation inclinée par rapport au premier axe longitudinal (C) de la partie réfléchissante (11a).

5. Dispositif (10) selon l'une quelconque des revendications 1 à 4, dans lequel la partie réfléchissante (11a) du réflecteur (11) est conformée en termes de motif(s) ou est structurée.

6. Dispositif (10) selon l'une quelconque des revendications 1 à 5, dans lequel le photocapteur (13) est une photodiode, de préférence un compteur de photons multi-pixels, un photomultiplicateur en silicium, un dispositif à couplage de charges ou un tube photomultiplicateur.

7. Dispositif (10) selon l'une quelconque des revendications 1 à 6, comprenant en outre une source de lumière agencée de telle sorte que la lumière émise par la source de lumière puisse être reçue par le photocapteur (13).

8. Dispositif (10) selon la revendication 7, incluant une fonction pour étalonner le photocapteur (13) au moyen de la lumière émise depuis la source de lumière.

9. Dispositif (10) selon l'une quelconque des revendications 1 à 8, dans lequel un moyen de protection ou un masque est prévu entre le moyen de contenance d'échantillon, lorsqu'il est contenu dans le réceptacle (12), et le photocapteur (13) de telle sorte que la lumière émise depuis l'échantillon du fait de la réaction de bioluminescence soit empêchée d'atteindre directement la partie photosensible du photocapteur (13).

10. Dispositif (10) selon l'une quelconque des revendications 1 à 9, comprenant en outre un capteur de température (15) pour mesurer la température de l'échantillon et/ou du moyen de contenance d'échantillon lorsque le moyen de contenance d'échantillon avec l'échantillon est contenu dans le réceptacle (12).

11. Dispositif selon la revendication 10, dans lequel le capteur de température est soit un capteur par contact (15b) agencé pour entrer en contact avec le moyen de contenance d'échantillon, soit un capteur sans contact (15a).

12. Dispositif (10) selon l'une quelconque des revendications 1 à 11, comprenant une chambre qui loge la partie réfléchissante (11a) du réflecteur (11), au moins une partie du moyen de contenance d'échantillon lorsqu'il est contenu dans le réceptacle (12), et la partie photosensible du photocapteur (13), dans lequel la chambre est agencée de telle sorte que ces éléments soient protégés de la lumière ambiante.

13. Appareil de mesure et d'analyse portatif (1) pour mesurer la teneur en ATP d'un échantillon, comprenant un dispositif (10) pour imager une réaction de bioluminescence selon l'une quelconque des revendications 1 à 12.
